# EUROPÄISCHE PATENTSCHRIFT

(11) **EP 2 018 289 B1**
(45) Veröffentlichungstag und Bekanntmachung des Hinweises auf die Patenterteilung: **23.05.2012**
(21) Anmeldenummer: 07724717.9
(22) Anmeldetag: 28.04.2007
(51) Int. Cl.: B60J 7/22

(54) **ANTRIEB ZUM BEWEGEN EINES WINDABWEISERS AN EINEM CABRIOLET**
DRIVE FOR MOVING A WIND DEFLECTOR ON A CABRIOLET
ENTRAINEMENT POUR DEPLACER UN DEFLECTEUR D'AIR SUR UN CABRIOLET

(30) Priorität: 19.05.2006 DE 102006023912
(43) Veröffentlichungstag der Anmeldung: 28.01.2009
(73) Patentinhaber: Daimler AG, 70327 Stuttgart (DE)
(72) Erfinder: FIDAN, Serkan, 71063 Sindelfingen (DE); PLOCHER, Bernd, 72108 Rottenburg (DE); SEIFERT, Daniel, 71067 Sindelfingen (DE)
(74) Vertreter: JENSEN & SON
(86) Internationale Anmeldenummer: PCT/EP2007/003790
(87) Internationale Veröffentlichungsnummer: WO 2007/134700

(56) Entgegenhaltungen:
- EP-A2- 0 895 889
- DE-A1- 3 833 046
- DE-A1-102004 017 642
- DE-A1-102004 027 087
- US-A1- 2004 256 885

## Beschreibung

Die Erfindung betrifft einen Antrieb zum Bewegen eines als Lamelle ausgeführten Windabweisers an einem Cabriolet, umfassend mindestens ein Koppelgetriebe, durch das die Lamelle von einer Nichtgebrauchsstellung in eine Gebrauchsstellung und umgekehrt stellbar ist und das an einem Ende an der Lamelle und am anderen Ende am Dachrahmen angelenkt ist.

Zur Vermeidung von Luftzug und Verwirbelungen sind an Cabriolets häufig Windabweiser vorgesehen. Zur Anpassung an verschiedene Betriebsbedingungen, z.B. Fahren mit geöffnetem oder geschlossenem Verdeck, können diese Windabweiser verstellbar ausgebildet sein.

Aus der DE 10 2004 027 087 A1 ist eine Vorrichtung zur Zugminderung an einem Cabriolet bekannt, bei der ein Windleitelement geschwindigkeitsabhängig ausfährt. Das Ausfahren erfolgt jedoch in einer Schwenkbewegung, bei der der Winkel des Windleitelementes sich ändert, was aerodynamisch ungünstig ist.

Aus der DE 10 2004 017 642 A1 ist eine Vorrichtung zur Betätigung eines Windabweiser für eine Dachöffnung bekannt, wobei eine als eine Scherenarmeinheit ausgebildete Gelenkhebelanordnung vorgesehen ist, die den Windabweiser von einer Verstau- oder Nichtgebrauchsposition, in der der Windabweiser im Wesentlichen parallel zur Dachöffnung angeordnet ist, in eine Betriebs- oder Gebrauchsposition überführt, in der sich der Windabweiser unter einem Winkel zur Dachöffnung erstreckt. Dabei erstrecken sich die Hebel der Gelenkhebelanordnung im Wesentlichen in Fahrzeugquerrichtung.

DE 38 33 046 A1 zeigt ein Kraftfahrzeug mit Cabriolet-Verdeck und einem Windabweiser. Der aus zwei weitgehend parallel zueinander angeordneten Lamellen bestehende Windabweiser kann mittels einer Viergelenkkette aus einer inaktiven Stellung in den Dachquerträger am oberen Abschluss der Windschutzscheibe in eine aktive Stellung ausgefahren werden. Zumindest ein Hebel der Viergelenkkette ist dabei antreibbar und bildet damit einen Antriebshebel für den Windabweiser.

Die EP 089 588 9 A2 zeigt ein Cabrio-Fahrzeug mit einem in einem oberen Bereich der Windschutzscheibe angeordneten Windabweiser, der in Richtung der Erstreckungsebene verfahren oder alternativ in eine parallele Ebene zur Windschutzscheibe ausgefahren werden kann, um die das Fahrzeug in Längsrichtung überstreichende Strömung beim Fahren über den Innenraum des Fahrzeugs hinwegzulenken. Das Windleitelement kann dabei durch eine Bewegung, welche sowohl eine Drehung als auch eine lineare Verschiebung umfasst, zwischen einer aktiven und einer inaktiven Stellung bewegt werden.

Es ist eine Aufgabe der Erfindung, einen Antrieb für einen lamellenförmigen Windabweiser anzugeben, der besonders einfach und sicher ausgebildet ist.

Die Aufgabe wird erfindungsgemäß durch die Merkmale des unabhängigen Anspruchs 1 gelöst. Vorteilhafte Weiterbildungen der Erfindung sind Gegenstand der Unteransprüche.

Der erfindungsgemäße Antrieb dient der Bewegung einer Lamelle eines Windabweisers an einem Cabriolet. Hierzu umfasst der Antrieb ein als Kurbelschwinggetriebe ausgebildetes Koppelgetriebe, das die Lamelle weitgehend parallel vom Dachrahmen weg in die Gebrauchsstellung anhebt bzw. am Dachrahmen in die Nichtgebrauchsstellung ablegt. Ein Kurbelschwinggetriebe (auch Kurbelschwinge oder Kurbelgetriebe oder Kurbelschwingenantrieb genannt) ermöglicht ein einfaches und sicheres sowie präzises Gleiten und somit Ein- und Ausfahren der Lamelle in Richtung einer ihrer Flächennormalen, wobei der Abstand der Lamelle zu einem Dachrahmen derart verkürzt oder vergrößert wird, dass die Lamelle parallel schräg nach vorne und nach oben angehoben bzw. parallel schräg nach hinten und nach unten bewegt wird. Der erfindungsgemäße Kurbelschwingantrieb wandelt dabei Drehbewegungen in geradlinige Bewegungen um. Auf diese Weise wird erreicht, dass die Lamelle weitgehend parallel verschiebbar ist, anstatt zu schwenken.

Ein manuelles oder ein elektrisches Antriebsmittel, z. B. manuell ein Hand- oder Fußantrieb, oder elektrisch ein Maschinen- oder Motorantrieb, greift an das Kurbelschwinggetriebe an.

Dabei sind in Breitenrichtung der Lamelle mehrere als Ausstellhebel und/oder Antriebshebel ausgebildete Drehhebel des Kurbelschwinggetriebes verteilt angeordnet.

Das Antriebsmittel greift an mindestens einem der Antriebshebel an. Dazu ist der als Antriebshebel ausgebildete Drehhebel mit einem ersten Drehhebelende um eine Lamellenachse drehbar angeordnet. Der Drehhebel ist an einem zweiten Drehhebelende um eine an einem Dachrahmen angeordnete, zur Lamellenachse parallele Dachrahmenachse drehbar gelagert. Der Drehhebel weist ein Langloch auf, das sich in einer Richtung von dem ersten Drehhebelende zu dem zweiten Drehhebelende erstreckt. Es ist ein angetriebener Kurbelarm vorgesehen, der ein erstes Kurbelarmende und ein zweites Kurbelarmende aufweist. An seinem ersten Kurbelarmende ist der Kurbelarm drehbar um eine im Wesentlichen parallel zur Dachrahmenachse liegende, am Dachrahmen angeordnete Kurbelarmachse gelagert. An seinem zweiten Kurbelarmende weist der Kurbelarm einen in das Langloch eingreifenden, rotationssymmetrischen ersten Zapfen auf.

In einer Ausführungsform sind zwei Antriebshebel vorgesehen, wobei das Antriebsmittel an ein Stangengetriebe angreift, das die Kurbelarmachsen der beiden Antriebshebel miteinander verbindet. Hierdurch wird ein Zwangsgleichlauf der beiden Antriebshebel bewirkt. Für eine weitgehend platzsparende und einfache Anordnung des Antriebsmittels sind die Antriebshebel rahmenseitig über das Stangengetriebe miteinander verbunden.

Im Betrieb des Kurbelschwinggetriebes greift das Antriebsmittel derart an dem Kurbelarm mindestens eines der Antriebshebel an, dass die Lamelle in eine Nichtgebrauchsstellung nahe am Dachrahmen bewegbar ist, indem der Kurbelarm so gedreht wird, dass der erste Zapfen eine Position im Langloch in der Nähe des ersten Drehhebelendes einnimmt. Die Lamelle ist in eine Gebrauchsstellung in einer maximalen Entfernung vom Dachrahmen bewegbar, indem der Kurbelarm so gedreht wird, dass der erste Zapfen eine Position im Langloch in der Nähe des zweiten Drehhebelendes einnimmt. Auf diese Weise ist die Lamelle zumindest in einer Richtung einer Flächennormalen der Lamelle bewegbar. Die Lamelle wird somit parallel verschoben. Eine geringfügige Verschiebungskomponente in einer Längs- oder Querrichtung der Lamelle tritt ebenfalls auf.

In einer bevorzugten Ausführungsform nimmt der Kurbelarm in der Gebrauchsstellung gegenüber dem Drehhebel eine solche Stellung ein, dass eine parallel zum Kurbelarm liegende, die Kurbelarmachse und den ersten Zapfen verbindende Linie etwa rechtwinklig auf einer in einer Längsrichtung des Langloches verlaufenden Linie steht. Auf diese Weise wird die Lamelle in der Gebrauchsstellung arretiert, so dass diese nicht durch von außen auftretende Kräfte verlassen werden kann, ohne dass der Kurbelarm gegenläufig gedreht wird.

Zur Stabilisierung stützt sich der als Antriebshebel ausgebildete Drehhebel in der Gebrauchsstellung bevorzugt an einem zweiten Zapfen ab, der so an dem Kurbelarm angeordnet ist, dass er in der Gebrauchsstellung in einem Winkel zwischen der ersten Linie und der zweiten Linie liegt, so dass der Drehhebel an dem zweiten Zapfen anschlägt.

Gegenüber dem Antriebshebel weist der Ausstellheber keinen Kurbelarm auf. Der Drehhebel ist direkt rahmenseitig angelenkt. In der einfachen Ausführungsform kann der Drehhebel ohne Langloch bzw. Nut ausgebildet sein.

Vorzugsweise ist mindestens einer der als Ausstell- und/oder Antriebshebel ausgebildeten Drehhebel in der Nichtgebrauchsstellung mit einer Verriegelungsvorrichtung verriegelbar, so dass die Lamelle nicht durch Fahrtwind oder andere Einflüsse aus der Nichtgebrauchsstellung gelöst werden kann. Eine solche Verriegelungsvorrichtung umfasst bevorzugt einen federbelasteten Bolzen, der seitlich in geeigneter Weise in den Drehhebel eingreift, um ihn zu arretieren.

Die Verriegelungsvorrichtung wird vorzugsweise mittels eines Seilzuges betätigt. Insbesondere ist die Verriegelungsvorrichtung durch einen Leerhub des Kurbelarms betätigbar, wenn dieser sich in der Nichtgebrauchsstellung befindet.

Bevorzugt liegen die Lamellenachsen im Wesentlichen in Richtung einer Längsausdehnung der Lamelle, die in Breiten- oder Querrichtung eines Fahrzeuges angeordnet ist. Auf diese Weise ist sichergestellt, dass die Lamelle nur in Richtung der Normalen auf ihrer Fläche und in Längsrichtung des Fahrzeuges bewegt wird.

In einer bevorzugten Ausführungsform sind mindestens drei Drehhebel vorgesehen, wobei die Lamellenachsen von mindestens zwei Drehhebeln in einer ersten Flucht liegen und die dazugehörigen Dachrahmenachsen in einer zweiten Flucht liegen. Diese Drehhebel dienen als Ausstelllenker oder Ausstellheber. Die Lamellenachse des dritten Drehhebels liegt in einer dritten Flucht, die von der ersten Flucht beabstandet ist und die dazugehörige Dachrahmenachse in einer vierten Flucht, die von der zweiten Flucht beabstandet ist. Dieser dritte Drehhebel dient als Antriebslenker oder Antriebshebel und weist einen über ein Antriebsmittel angetriebenen Kurbelarm auf. Jeder Drehhebel liegt zu jedem anderen Drehhebel parallel. Auf diese Weise ergibt sich, von einem Ende der Lamelle gesehen ein Parallelogramm aus dem Dachrahmen und der parallel dazu liegenden Lamelle und den zueinander parallel liegenden Drehhebeln. Somit wird ein Verkippen der Lamelle vermieden.

In einer besonders bevorzugten Ausführungsform sind zwei Drehhebel, deren Lamellenachsen in der ersten Flucht liegen, mit je einer Verriegelungsvorrichtung in der Nähe je eines Endes der Lamelle angeordnet. Diese Drehhebel dienen lediglich als Ausstellheber und weisen keinen Kurbelarm auf. Die als Ausstellheber dienenden Drehhebel sind lamellenseitig und rahmenseitig mittels des Drehhebels schwenkbar am Dachrahmen befestigt. Weiter sind zwei Drehhebel, deren Lamellenachsen in der dritten Flucht liegen, jeweils in einem mittleren, von den Enden der Lamelle beabstandeten Bereich der Lamelle angeordnet und mit Kurbelarmen versehen. Mit anderen Worten: Es sind zwei innere und aktive Drehhebel, die über ein mechanisches oder elektrisches Antriebsmittel bewegbar sind, und zwei äußere und passive Drehhebel, die insbesondere der Verriegelung in einer der Endstellungen dienen, vorgesehen zur weitgehend parallelen Führung der Lamelle vom Dachrahmen weg oder zu diesem hin und somit für eine lineare Ausstellbewegung. In der einfachsten Ausführungsform sind drei Drehhebel, beispielsweise zwei Ausstellhebel (auch Führungs- und Verriegelungshebel genannt) und ein Antriebshebel ausreichend. Die Anzahl der vorgesehenen Drehhebel - aktive und/oder passive - wird bestimmt beispielsweise durch die Länge und Form der auszufahrenden oder anzuhebenden Lamelle.

Ein Ausführungsbeispiel der Erfindung wird im Folgenden anhand von Zeichnungen näher erläutert.

Dabei zeigen:
- Fig. 1: eine perspektivische Ansicht einer als Windabweiser dienenden Lamelle mit einem als Kurbelschwingantrieb ausgebildeten Antrieb mit mehreren Drehhebeln zum Bewegen der Lamelle,
- Fig. 2: eine Schnittdarstellung eines als Antriebshebel ausgebildeten Drehhebels im eingefahrenen Zustand in einer Nichtgebrauchsstellung,
- Fig. 3: eine Schnittdarstellung eines als Antriebshebel ausgebildeten Drehhebels im ausgefahrenen Zustand in einer Gebrauchsstellung,
- Fig. 4: eine perspektivische Darstellung eines Antriebshebels in einer Gebrauchsstellung, und
- Fig. 5: eine perspektivische Darstellung eines Antriebshebels in einer Nichtgebrauchsstellung.

Einander entsprechende Teile sind in allen Figuren mit den gleichen Bezugszeichen versehen.

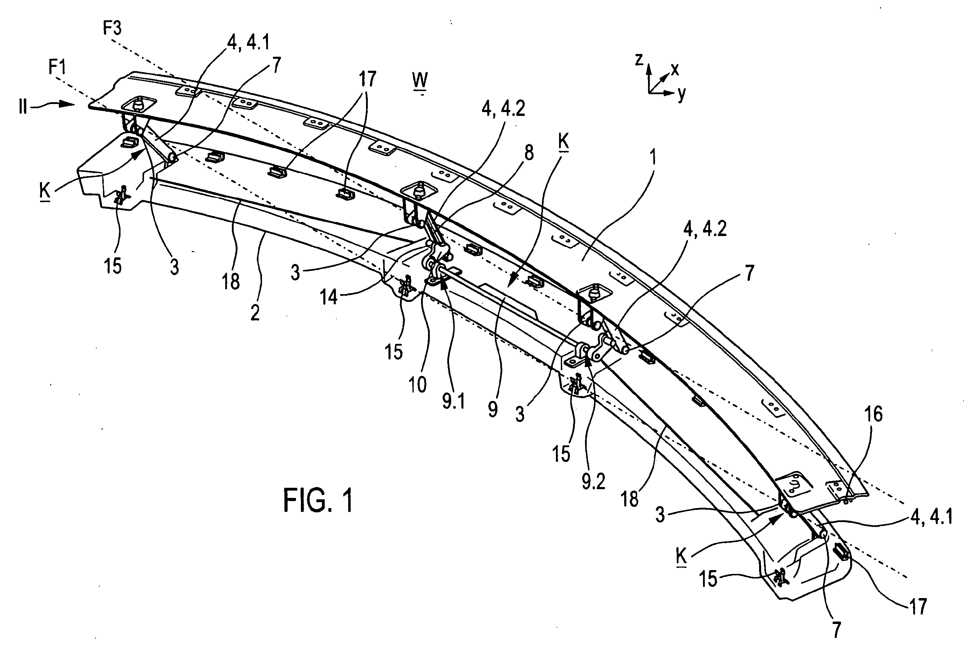

In Figur 1 ist eine perspektivische Ansicht einer Lamelle 1 mit einem als Kurbelschwinggetriebe K ausgebildeten Koppelgetriebe zum Bewegen der Lamelle 1 von einer Nichtgebrauchsstellung I in eine Gebrauchsstellung II gezeigt. Die Lamelle 1 ist auf einem Dachrahmen 2 angeordnet, beispielsweise dem Dachrahmen eines Cabriolets. Die Lamelle 1 dient beispielsweise als Windabweiser W, der die in einen Fahrzeuginnenraum anströmende Luft gezielt so umlenkt, dass in den Fahrzeuginnenraum hineinströmende Wirbel und Luftströmungen weitgehend vermieden sind.

Die Lamelle 1 weist eine insbesondere über die gesamte Fahrzeugbreite verlaufende Krümmung auf. Um eine derart gekrümmte Lamelle 1 in einfacher Form linear in eine parallele Position zum Dachrahmen 2 auszufahren und wieder einzufahren, umfasst das Kurbelschwinggetriebe K entlang der Breitenrichtung y der Lamelle 1 mehrere verteilt angeordnete Drehhebel 4, die zueinander parallel angeordnet sind und als Ausstellhebel 4.1 bzw. Antriebshebel 4.2 ausgebildet sind, die nachfolgend im Detail näher erläutert werden.

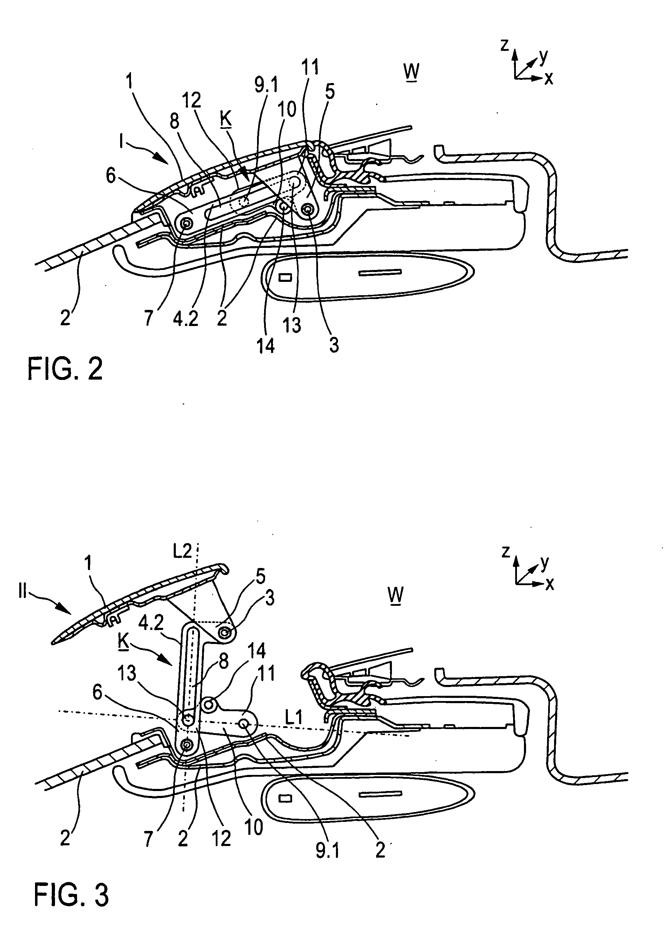

An der Lamelle 1 sind vier Drehhebel 4 vorgesehen, von denen zwei als Ausstellhebel 4.1 (auch äußere Drehhebel genannt) dienen und in der Nähe jeweils eines Endes der Lamelle 1 angeordnet sind. Zwei weitere Drehhebel 4 dienen als Antriebshebel 4.2 (auch innere Drehhebel genannt) und sind in einem zentralen Bereich der Lamelle 1 angeordnet. Die Antriebshebel 4.2 im zentralen Bereich verfügen über angetriebene Kurbelarme 10, die in den Figuren 1 und 2 näher beschrieben werden und deren Kurbelarmachsen 9.1 bzw. 9.2 mittels Stangengetriebes 9 miteinander verbunden sind. D.h. die inneren oder innen liegenden Antriebshebel 4.2 sind aktiv angetrieben über das Stangengetriebe 9 mittels eines nicht näher dargestellten Antriebsmittels, beispielsweise elektrisch mit einem Elektromotor oder mechanisch über einen Fuß- oder Handantrieb. Alternativ kann das Antriebsmittel nur an einen der Antriebshebel 4.2 angreifen.

Die äußeren oder außen liegenden Ausstellhebel 4.1 sind passiv ausgeführt und dienen der linearen Ein- und Ausstellbewegung der Lamelle 1 sowie der Verriegelung dieser in einer ihrer Endstellung I bzw. II.

Das Stangengetriebe 9 und die Kurbelarmachsen 9.1, 9.2 sind am Dachrahmen 2 angeordnet und drehbar gehalten. Der jeweilige Kurbelarm 10 der Antriebshebel 4.2 ist an der drehbaren Kurbelarmachse 9 befestigt. Alternativ kann der jeweilige Kurbelarm 10 auch drehbar an der zugehörigen Kurbelarmachse 9 angeordnet sein.

Durch Drehung des Stangengetriebes 9 werden die Kurbelarmachsen 9.1, 9.2 und somit der Kurbelarm 10 in eine Drehbewegung versetzt, der durch die lineare Führung eines ersten Zapfens 13 in einem Langloch 8 des jeweiligen Antriebshebels 4.2 die daraus resultierende Drehbewegung in eine Linearbewegung der Lamelle 1 umsetzt.

Die äußeren Ausstellhebel 4.1 in der Nähe der Enden der Lamelle 1 sind im gezeigten Ausführungsbeispiel nicht angetrieben, so dass hier kein Kurbelarm 10 vorgesehen ist. Das Langloch 8 kann hier entfallen. Aus Gründen der einfacheren Fertigung könnten aber auch hier Drehhebel 4 mit Langlöchern 8 verwendet werden.

Die Lamellenachsen 3 der beiden äußeren Ausstellhebel 4.1 liegen in einer ersten Flucht F1. Die Dachrahmenachsen 7 der äußeren Ausstellhebel 4.1 liegen in einer zweiten Flucht F2. Die Lamellenachsen 3 der beiden inneren Antriebshebel 4.2 liegen in einer dritten Flucht F3, die von der ersten Flucht F1 beabstandet ist. Die Dachrahmenachsen 7 der inneren Antriebshebel 4.2 liegen in einer vierten Flucht F4, die von der zweiten Flucht F2 beabstandet ist. Aus Gründen der Übersichtlichkeit sind in Figur 1 nur die Fluchten F1 und F3 dargestellt. Jeder Drehhebel 4.1, 4.2 liegt zu jedem anderen Drehhebel 4.1, 4.2 parallel. Auf diese Weise ergibt sich, von einem Ende der Lamelle 1 gesehen ein Parallelogramm mit den Dachrahmenachsen 7 und den Lamellenachsen 3 als Eckpunkte. Hierdurch wird ein Verkippen der Lamelle 1 vermieden, unabhängig davon, in welcher der beiden Endstellungen I, II sie sich befindet oder ob sie eine Zwischenstellung einnimmt.

Am Dachrahmen 2 sind als Verriegelungsvorrichtung 15 beispielsweise Halteklammern vorgesehen, in die die Lamellenachsen 3 in der Nichtgebrauchsstellung I gleiten, so dass sie dort gehalten werden und die Lamelle 1 nicht durch Fahrtwind oder andere Kräfte unbeabsichtigt die Nichtgebrauchsstellung I verlässt. An der Vorderkante der Lamelle 1 sind weitere Haltevorrichtungen 16 für diesen Zweck vorgesehen, deren Gegenstücke 17 am Dachrahmen 2 angeordnet sind.

Um die Lamelle 1 in der Nichtgebrauchsstellung I zu fixieren, können insbesondere an den äußeren Ausstellhebeln 4.1, jedoch auch an den inneren Antriebshebeln 4.2, andere geeignete Verriegelungsvorrichtungen vorgesehen sein. Eine mögliche Verriegelungsvorrichtung umfasst an jedem Ausstellhebel 4.1 bevorzugt einen federbelasteten Bolzen (nicht dargestellt), der seitlich in geeigneter Weise in den Ausstellhebel 4.1 eingreift, um ihn zu arretieren. Der Bolzen wird beispielsweise mittels eines Seilzuges 18 betätigt, der an einem Kurbelarm 10 der Antriebshebel 4.2 so angeordnet ist, dass der Bolzen den Ausstellhebel 4.1 arretiert, wenn sich der Kurbelarm 10 in der Nichtgebrauchsstellung I befindet und einen Leerhub ausführt.

Alternativ zu dem Langloch 8 des jeweiligen Antriebshebels 4.2 kann eine Nut vorgesehen sein. Langloch 8 oder Nut können auch gekrümmt ausgebildet sein.

In Fig. 2 ist eine Schnittansicht durch einen Windabweiser W im Bereich eines Antriebshebels 4.2 gezeigt. Der Dachrahmen 2 kann, wie in Figur 2 gezeigt, eine Vielzahl von Einzelteilen umfassen, deren Ausbildung für die Erfindung jedoch nicht wesentlich ist.

An der Lamelle 1 ist die Lamellenachse 3 des Antriebshebels 4.2 angeordnet, die parallel zur Lamelle 1 liegt und im Wesentlichen in deren Breitenrichtung y ausgerichtet ist. Für eine weitgehend lineare Verschiebung der Lamelle 1 in Richtung ihrer Flächennormalen z ist der Antriebshebel 4.2 als Kurbelschwinggetriebe ausgeführt. Der Antriebshebel 4.2 wird nachfolgend im Detail näher erläutert:
Der Antriebshebel 4.2 ist an einem ersten Drehhebelende 5 drehbar um die Lamellenachse 3 angeordnet. An einem zweiten Drehhebelende 6 des Antriebshebels 4.2 ist dieser um eine an dem Dachrahmen 2 angeordnete, zur Lamellenachse 3 parallele Dachrahmenachse 7 drehbar gelagert.

Der Antriebshebel 4.2 weist ein Langloch 8 auf, das sich im Wesentlichen in einer Richtung von dem ersten Drehhebelende 5 zu dem zweiten Drehhebelende 6 erstreckt.

An dem Dachrahmen 2 ist weiterhin eine Kurbelarmachse 9.1 angeordnet, die parallel zur Dachrahmenachse 7 liegt. Ein Kurbelarm 10 ist an einem ersten Kurbelarmende 11 drehbar um die Kurbelarmachse 9.1 gelagert. Der Kurbelarm 10 oder die Kurbelarmachse 9.1 sind auf hier nicht gezeigte Weise über das Stangengetriebe 9 mit einem Antriebsmittel versehen, beispielsweise mit einem Elektromotor. Die Kurbelarmachse 9.1 zeigt in Richtung des Betrachters der Figur und durchquert nicht das Langloch 8.

An einem zweiten Kurbelarmende 12 weist der Kurbelarm 10 einen in das Langloch 8 eingreifenden, rotationssymmetrischen ersten Zapfen 13 auf. Weiterhin ist ein zweiter Zapfen 14 vorgesehen, dessen Anordnung und Funktion in Figur 3 deutlich werden. In Figur 2 befindet sich die Lamelle 1 in einer Nichtgebrauchsstellung I nahe am Dachrahmen 2. Zu diesem Zweck ist der Kurbelarm 10 von seinem Antriebsmittel über die Kurbelarmachse 9.1 so gedreht, dass der erste Zapfen 13 eine Position im Langloch 8 in der Nähe des ersten Drehhebelendes 5 einnimmt.

In Figur 3 ist der Windabweiser W aus Figur 2 mit dem Antriebshebel 4.2 in einer Schnittdarstellung gezeigt, wobei sich die Lamelle 1 in einer Gebrauchsstellung II in einer maximalen Entfernung vom Dachrahmen 2 befindet.

Hierzu wurde der Kurbelarm 10 oder die Kurbelarmachse 9.1 aus der in Figur 2 gezeigten Stellung entgegen dem Uhrzeigersinn gedreht, so dass der erste Zapfen 13 in dem Langloch 8 in die Nähe des zweiten Drehhebelendes 6 gleitet. Dabei wird der Antriebshebel 4.2 so nach oben gedrückt, dass die Lamelle 1 sich in Richtung einer Normalen auf ihrer Fläche bewegt. Eine Bewegung der Lamelle 1 in Bildrichtung links tritt dabei ebenso unvermeidbar auf.

Der Kurbelarm 10 nimmt in der Gebrauchsstellung II gegenüber dem Antriebshebel 4.2 eine solche Stellung ein, dass eine parallel zum Kurbelarm 10 liegende, die Kurbelarmachse 9.1 und den ersten Zapfen 13 verbindende erste Linie L1 etwa rechtwinklig auf einer in einer Längsrichtung des Langloches 8 verlaufenden zweiten Linie L2 steht. Auf diese Weise wird die Lamelle 1 in der Gebrauchsstellung II arretiert, so dass diese nur durch eine erneute, gegenläufige Drehung des Kurbelarmes 10 verlassen werden kann.

Zusätzlich stützt sich der Antriebshebel 4.2 in der Gebrauchsstellung II an dem zweiten Zapfen 14 ab, der so an dem Kurbelarm 10 angeordnet ist, dass er in der Gebrauchsstellung II in einem Winkel zwischen der ersten Linie L1 und der zweiten Linie L2 liegt, so dass der Antriebshebel 4.2 daran anschlägt.

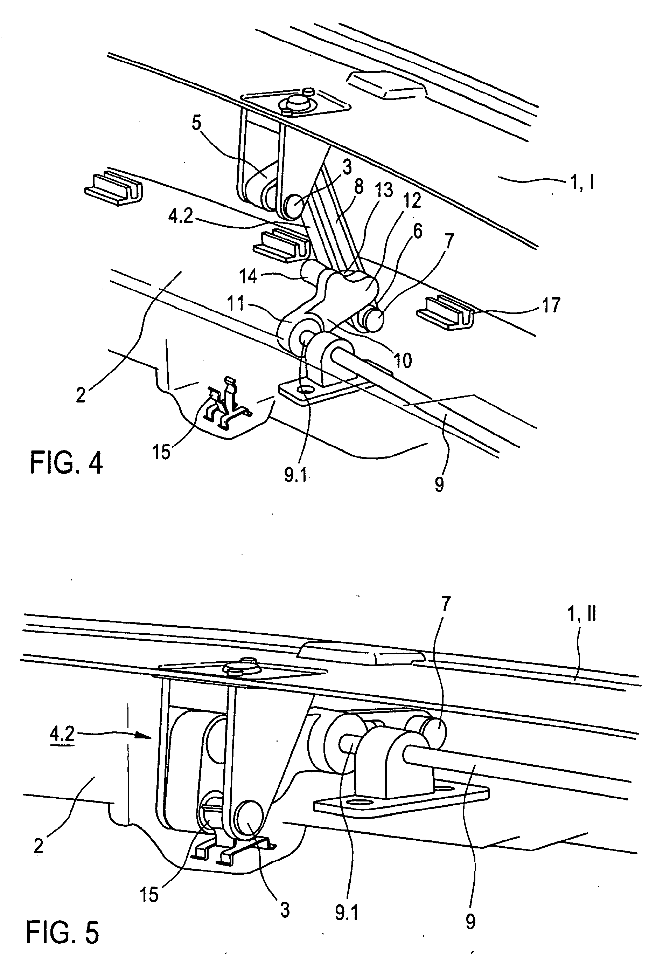

Die Figuren 4 und 5 zeigen jeweils einen der Antriebshebel 4.2 in einer perspektivischen Darstellung im ausgefahrenen Zustand (Figur 4) und im eingefahrenen Zustand (Figur 5).

## Patentansprüche

1. Antrieb zum Bewegen eines als Lamelle (1) ausgeführten Windabweisers (W), umfassend mindestens ein Koppelgetriebe, durch das die Lamelle (1) von einer Nichtgebrauchsstellung (I) in eine Gebrauchsstellung (II) und umgekehrt stellbar ist und das an einem Ende an der Lamelle (1) und am anderen Ende am Dachrahmen (2) angelenkt ist, wobei das Koppelgetriebe als ein Kurbelschwinggetriebe (K) ausgebildet ist, das die Lamelle (1) weitgehend parallel vom Dachrahmen (2) weg in die Gebrauchsstellung (I) anhebt bzw. am Dachrahmen (6) in die Nichtgebrauchsstellung (II) ablegt, wobei ein manuelles Antriebsmittel oder ein elektrisches Antriebsmittel an das Kurbelschwinggetriebe (K) angreift und das Kurbelschwinggetriebe (K) mindestens zwei in Breitenrichtung (Y) der Lamelle (1) verteilt angeordnete und als Ausstellhebel (4.1) und/oder Antriebshebel (4.2) ausgebildete Drehhebel (4) umfasst, wobei das Antriebsmittel an mindestens einem der Antriebshebel (4.2) angreift, wobei der als Antriebshebel (4.2) ausgebildete Drehhebel (4) an einem ersten Drehhebelende (5) um eine Lamellenachse (3) an der Lamelle (1) und an einem zweiten Drehhebelende (6) um eine an dem Dachrahmen (2) angeordnete, zur Lamellenachse (3) parallele Dachrahmenachse (7) drehbar gelagert ist,
**dadurch gekennzeichnet, dass**
der Drehhebel (4) ein Langloch (8) oder eine Nut aufweist, das oder die sich im Wesentlichen in einer Richtung von dem ersten Drehhebelende (5) zu dem zweiten Drehhebelende (6) erstreckt und ein Kurbelarm (10) vorgesehen ist, der ein erstes Kurbelarmende (11) und ein zweites Kurbelarmende (12) aufweist und an dem ersten Kurbelarmende (11) an eine im Wesentlichen parallel zur Dachrahmenachse (7) liegende, am Dachrahmen (2) angeordnete und drehbare Kurbelarmachse (9.1, 9.2) angeordnet ist und an dem zweiten Kurbelarmende (12) einen in das Langloch (8) oder die Nut eingreifenden, rotationssymmetrischen ersten Zapfen (13) aufweist.

2. Antrieb nach Anspruch 1,
**dadurch gekennzeichnet, dass**
das Antriebsmittel an ein Stangengetriebe (9) angreift, das die Kurbelarmachsen (9.1, 9.2) von zwei als Antriebshebel (4.2) ausgebildete Drehhebel (4) miteinander verbindet.

3. Antrieb nach Anspruch 2,
**dadurch gekennzeichnet, dass**
die als Antriebshebel (4.2) ausgebildeten Drehhebel (4) rahmenseitig über das Stangengetriebe (9) miteinander verbunden sind.

4. Antrieb nach einem der Ansprüche 1 bis 3,
**dadurch gekennzeichnet, dass**
das Antriebsmittel an dem Kurbelarm (10) mindestens eines der als Antriebshebel (4.2) ausgebildeten Drehhebel (4) derart angreift, dass die Lamelle (1) in die Nichtgebrauchsstellung (I) nahe am Dachrahmen (2) bewegbar ist, indem der betreffende Kurbelarm (10) so drehbar ist, dass der erste Zapfen (13) eine Position im Langloch (8) oder in der Nut in der Nähe des ersten Drehebelendes (5) einnimmt und wobei die Lamelle (1) in die Gebrauchsstellung (II) in einer maximalen Entfernung vom Dachrahmen (2) bewegbar ist, indem der Kurbelarm (10) so drehbar ist, dass der erste Zapfen (13) eine Position im Langloch (8) oder in der Nut in der Nähe des zweiten Drehebelendes (6) einnimmt.

5. Antrieb nach Anspruch 4,
**dadurch gekennzeichnet, dass**
der Kurbelarm (10) in der Gebrauchsstellung (II) gegenüber dem Antriebshebel (4.2) eine solche Stellung einnimmt, dass eine parallel zum Kurbelarm (10) liegende, die Kurbelarmachse (9.1, 9.2) und den ersten Zapfen (13) verbindende erste Linie (L1) im Wesentlichen rechtwinklig auf einer in einer Längsrichtung des Langloches (8) oder der Nut verlaufenden zweiten Linie (L2) steht.

6. Antrieb nach einem der Ansprüche 4 oder 5,
**dadurch gekennzeichnet, dass**
an dem Kurbelarm (10) ein zweiter Zapfen (14) vorgesehen ist, der in der Gebrauchsstellung (II) so in einem Winkel zwischen der ersten Linie (L1) und der zweiten Linie (L2) liegt, dass der Antriebshebel (4.2) an dem zweiten Zapfen (14) anschlägt.

7. Antrieb nach einem der Ansprüche 1 bis 6,
**dadurch gekennzeichnet, dass**
mindestens einer der als Ausstellheber (4.1) und/oder Antriebshebel (4.2) ausgebildeten Drehhebel (4) in der Nichtgebrauchsstellung (I) mit einer Verriegelungsvorrichtung (15) verriegelbar ist.

8. Antrieb nach Anspruch 7,
**dadurch gekennzeichnet, dass**
die Verriegelungsvorrichtung (15) einen federbelasteten Bolzen umfasst.

9. Antrieb nach einem der Ansprüche 7 oder 8,
**dadurch gekennzeichnet, dass**
die Verriegelungsvorrichtung (15) einen Seilzug (18) umfasst.

10. Antrieb nach einem der Ansprüche 7 bis 9,
**dadurch gekennzeichnet, dass**
die Verriegelungsvorrichtung (15) durch einen Leerhub des Kurbelarms (10) betätigbar, wenn dieser sich in der Nichtgebrauchsstellung (I) befindet.

11. Antrieb nach einem der vorhergehenden Ansprüche,
**dadurch gekennzeichnet, dass**
mindestens drei Drehhebel (4) vorgesehen sind, wobei die Lamellenachsen (3) von mindestens zwei als Ausstellheber (4.1) ausgebildeten Drehhebeln (4) in einer ersten Flucht (F1) liegen und die dazugehörigen Dachrahmenachsen (7) in einer zweiten Flucht (F2) liegen und wobei die Lamellenachse (3) mindestens eines dritten als Antriebshebel (4.2) ausgebildeten Drehhebels (4) in einer dritten Flucht (F3) liegt, die von der ersten Flucht (F1) der anderen Drehhebel (4) beabstandet ist und die dazugehörige Dachrahmenachse (7) in einer vierten Flucht (F4) liegt, die von der zweiten Flucht (F2) beabstandet ist und wobei jeder Drehhebel (4) zu jedem anderen Drehhebel (4) parallel liegt.

12. Antrieb nach Anspruch 11,
**dadurch gekennzeichnet, dass**
zwei als Ausstellhebel (4.1) ausgebildete Drehhebel (4), deren Lamellenachsen (3) in der ersten Flucht (F1) liegen, mit je einer Verriegelungsvorrichtung (15) in der Nähe je eines Endes der Lamelle (1) angeordnet sind und dass zwei als Antriebshebel (4.2) ausgebildete Drehhebel (4), deren Lamellenachsen (3) in der dritten Flucht (F3) liegen, jeweils in einem mittleren, von den Enden der Lamelle (1) beabstandeten Bereich der Lamelle (1) angeordnet und mit Kurbelarmen (10) versehen sind, an deren Kurbelarmachsen (9) ein Antriebsmittel angreift.

## Claims

1. Drive for moving a wind deflector (W) designed as a blade (1), comprising at least one coupler mechanism whereby the blade (1) can be moved from an inoperative position (I) into an operative position (II) and vice versa and which is hinged to the blade (1) at one end and to the roof rail (2) at the other end, wherein the coupler mechanism is designed as a crank arm mechanism (K) which lifts the blade (1) in a largely parallel arrangement away from the roof rail (2) into the operative position (I) or places it at the roof rail (6) in the inoperative position (II), wherein a manual drive means or an electric drive means acts on the crank arm mechanism (K) and the crank arm mechanism (K) comprises at least two rotary levers (4) distributed in the width direction (Y) of the blade (1) and designed as opening levers (4.1) and/or as drive levers (4.2), wherein the drive means acts on at least one of the drive levers (4.2), wherein the rotary lever (4) designed as a drive lever (4.2) is mounted at a first rotary lever end (5) on the blade (1) for rotation about a blade axis (3) and mounted at a second rotary lever end (6) for rotation about a roof rail axis (7) of the roof rail (2) which extends parallel to the blade axis (3),
**characterised in that**
the rotary lever (4) has a slot (8) or a groove which extends substantially in one direction from the first rotary lever end (5) to the second rotary lever end (6), and **in that** a crank arm (10) having a first crank arm end (11) and a second crank arm end (12) is provided, and **in that** a rotatable crank arm axis (9.1, 9.2) extending substantially parallel to the roof rail axis (7) and located on the roof rail (2) is provided at the first crank arm end (11), and **in that** a rotationally symmetric first pin (13) engaging the slot (8) or the groove is provided at the second crank arm end (12).

2. Drive according to claim 1,
**characterised in that**
the drive means acts on a rod mechanism (9) which connects the crank arm axes (9.1, 9.2) of two rotary levers (4) designed as drive levers (4.2) to one another.

3. Drive according to claim 2,
**characterised in that**
the rotary levers (4) designed as drive levers (4.2) are connected to one another by way of the rod mechanism (9) on the roof rail side.

4. Drive according to any of claims 1 to 3,
**characterised in that**
the drive means acts on the crank arm (10) of at least one of the rotary levers (4) designed as drive levers (4.2) in such a way that the blade (1) can be moved into the inoperative position (I) close to the roof rail (2) by providing that the respective crank arm (10) is rotatable in such a way that the first pin (13) adopts a position in the slot (8) or in the groove close to the first rotary lever end (5), and **in that** the blade (1) can be moved into the operative position (II) at a maximum distance from the roof rail (2) by providing that the crank arm (10) is rotatable in such a way that the first pin (13) adopts a position in the slot (8) or in the groove close to the second rotary lever end (6).

5. Drive according to claim 4,
**characterised in that**
in the operative position (II) the crank arm (10) adopts a position with respect to the drive lever (4.2) in which a first line (L1) which lies parallel to the crank arm (10) and connects the crank arm axes (9.1, 9.2) and the first pin (13) stands substantially perpendicular on a second line (L2) extending in a longitudinal direction of the slot (8) or the groove.

6. Drive according to claim 4 or 5,
**characterised in that**
a second pin (14), which in the operative position (II) lies in an angle between the first line (L1) and the second line (L2) in such a way that the drive lever (4.2) strikes the second pin (14), is provided on the crank arm (10).

7. Drive according to any of claims 1 to 6,
**characterised in that**
at least one of the rotary levers (4) designed as opening levers (4.1) and/or as drive levers (4.2) can be locked in the inoperative position (I) by means of a locking device (15).

8. Drive according to claim 7,
**characterised in that**
the locking device (15) comprises a spring-loaded bolt.

9. Drive according to claim 7 or 8,
**characterised in that**
the locking device (15) comprises a control cable (18).

10. Drive according to any of claims 7 to 9,
**characterised in that**
the locking device (15) can be operated by an idle stroke of the crank arm (10) when the latter is in the inoperative position (I).

11. Drive according to any of the preceding claims,
**characterised in that**
at least three rotary levers (4) are provided, wherein the blade axes (3) of at least two rotary levers (4) designed as opening levers (4.1) lie in a first alignment (F1) and the associated roof rail axes (7) lie in a second alignment (F2), and wherein the blade axis (3) of at least one third rotary lever (4) designed as a drive lever (4.2) lies in a third alignment (F3) at a distance from the first alignment (F1) of the other rotary levers (4) and the associated roof rail axis (7) lies in a fourth alignment (F4) at a distance from the second alignment (F2), and wherein each rotary lever (4) is parallel to each other rotary lever (4).

12. Drive according to claim 11,
**characterised in that**
two rotary levers (4) designed as opening levers (4.1), the blade axes (3) of which lie in the first alignment (F1), are arranged close to one end each of the blade (1) with a locking device (15) each, and **in that** two rotary levers (4) designed as drive levers (4.2), the blade axes (3) of which lie in the third alignment (F3), are each arranged in a central region of the blade (1) at a distance from the ends of the blade (1) and provided with crank arms (10) on the crank arm axes (9) of which a drive means acts.

## Revendications

1. Entraînement servant à déplacer un déflecteur d'air (W) conçu en forme de lamelle (1), comprenant au moins un mécanisme d'accouplement qui sert à amener la lamelle (1) d'une position de non-utilisation (I) dans une position d'utilisation (II), et inversement et dont une extrémité est articulée sur la lamelle (1) et l'autre extrémité est articulée sur le cadre de toit (2), le mécanisme d'accouplement étant conçu comme mécanisme à bielle oscillante (K) qui lève la lamelle (1) en l'éloignant du cadre de toit (2) de manière largement parallèle pour l'amener en position d'utilisation (I) ou qui la dépose en position de non-utilisation (II) sur le cadre de toit (6), un moyen d'entraînement manuel ou un moyen d'entraînement électrique agissant sur le mécanisme à bielle oscillante (K) et le mécanisme à bielle oscillante (K) comprenant au moins deux leviers rotatifs (4) conçus comme des leviers d'éjection (4.1) et / ou comme des leviers d'entraînement (4.2) répartis dans le sens de la largeur (Y) de la lamelle (1), le moyen d'entraînement agissant au moins sur l'un des leviers d'entraînement (4.2), le levier rotatif (4) conçu comme un levier d'entraînement (4.2) sur une première extrémité (5) de levier rotatif étant monté rotatif autour d'un axe de lamelle (3) sur la lamelle (1) et sur une seconde extrémité (6) de levier rotatif autour d'un axe (7) de cadre de toit, parallèle à l'axe (3) de lamelle, disposé sur le cadre de toit (2), **caractérisé en ce que** le levier rotatif (4) présente un trou ovale (8) ou une rainure, qui s'étend essentiellement dans un sens partant de la première extrémité (5) de levier rotatif jusqu'à la seconde extrémité (6) de levier rotatif et il est prévu un bras de manivelle (10) qui présente une première extrémité (11) et une seconde extrémité (12) et qui est disposé sur la première extrémité (11) sur un axe (9.1, 9.2) de bras de manivelle rotatif et disposé sur le cadre de toit (2), essentiellement parallèle à l'axe (7) de cadre de toit, et qui présente sur la seconde extrémité (12) un premier tenon (13) symétrique en rotation s'engageant dans le trou ovale (8) ou dans la rainure.

2. Entraînement selon la revendication 1, **caractérisé en ce que** le moyen d'entraînement agit sur une commande par bielle (9) qui relie entre eux les axes de bras de manivelle (9.1, 9.2) de deux leviers rotatifs (4) conçus comme des leviers d'entraînement (4.2).

3. Entraînement selon la revendication 2, **caractérisé en ce que** les leviers rotatifs (4) conçus comme des leviers d'entraînement (4.2) sont reliés entre eux par la commande par bielle (9), du côté du cadre.

4. Entraînement selon l'une quelconque des revendications 1 à 3, **caractérisé en ce que** le moyen d'entraînement agit sur le bras de manivelle (10) d'au moins un des leviers rotatifs (4) conçus comme leviers d'entraînement (4.2) de telle sorte que la lamelle (1) dans une position de non-utilisation (I) peut se déplacer à proximité du cadre de toit (2) faisant en sorte que le bras de manivelle (10) concerné peut être pivoté de sorte que le premier tenon (13) prenne position dans le trou ovale (8) ou dans la rainure à proximité de la première extrémité (5) de levier rotatif et la lamelle (1) dans la position d'utilisation (11) peut être déplacée en s'éloignant au maximum du cadre de toit (2) faisant en sorte que le bras de manivelle (10) peut être pivoté de telle sorte que le premier tenon (13) prenne position dans le trou ovale (8) ou dans la rainure à proximité de la seconde extrémité (6) de levier rotatif.

5. Entraînement selon la revendication 4, **caractérisé en ce que** le bras de manivelle (10) dans la position d'utilisation (II) par rapport au levier d'entraînement (4.2) prend une telle position qu'une première ligne (LI) parallèle au bras de manivelle (10) reliant l'axe de bras de manivelle (9.1, 9.2) soit essentiellement perpendiculaire à une seconde ligne (L2) s'étendant dans une direction longitudinale du trou ovale (8) ou de la rainure.

6. Entraînement selon l'une quelconque des revendications 4 ou 5, **caractérisé en ce que** sur le bras de manivelle (10) est prévu un second tenon qui dans la position d'utilisation (II) se trouve dans un angle entre la première ligne (LI) et la seconde ligne (L2) de telle sorte que le levier d'entraînement (4.2) vienne en butée sur le second tenon (14).

7. Entraînement selon l'une quelconque des revendications 1 à 6, **caractérisé en ce qu'**au moins l'un des leviers rotatifs (4) conçus comme des leviers d'éjection (4.1) et / ou comme des leviers d'entraînement (4.2) peut être verrouillé dans la position de non-utilisation (I) par un dispositif de verrouillage (15).

8. Entraînement selon la revendication 7, **caractérisé en ce que** le dispositif de verrouillage (15) comprend un boulon commandé par ressort.

9. Entraînement selon l'une quelconque des revendications 7 ou 8, **caractérisé en ce que** le dispositif de verrouillage (15) comprend une commande par câble (18).

10. Entraînement selon l'une quelconque des revendications 7 à 9, **caractérisé en ce que** le dispositif de verrouillage (15) peut être actionné par une course à vide du bras de manivelle (10) lorsque celui-ci se trouve dans une position de non-utilisation (I).

11. Entraînement selon l'une quelconque des revendications précédentes, **caractérisé en ce qu'**au moins trois leviers rotatifs (4) sont prévus, les axes de lamelle (3) d'au moins deux leviers rotatifs (4) conçus comme des leviers d'éjection (4.1) se trouvent dans un premier alignement (FI) et les axes de cadre de toit (7) correspondants se trouve dans un second alignement (F2) et l'axe de lamelle (3) d'au moins un troisième levier rotatif (4) conçu comme levier d'entraînement (4.2) se trouve dans un troisième alignement (F3) qui est espacé du premier alignement (FI) des autres leviers rotatifs (4) et l'axe de cadre de toit (7) correspondant se trouve dans un quatrième alignement (F4) qui est espacé du second alignement (F2) et chaque levier rotatif (4) étant parallèle à chaque autre levier rotatif (4).

12. Entraînement selon la revendication 11, **caractérisé en ce que** deux leviers rotatifs (1) conçus comme des leviers d'éjection (4.1), dont les axes de lamelle (3) se trouvent dans le premier alignement (FI), avec chacun un dispositif de verrouillage (15), sont disposés à proximité de chaque extrémité de la lamelle (1) et **en ce que** deux leviers rotatifs (4) conçus comme des leviers d'entraînement, dont les axes de lamelle (3) se trouvent dans le troisième alignement (F3), sont disposés chacun dans une zone médiane de la lamelle espacée des extrémités des lamelles (1) et pourvus de bras de manivelle (10), un levier d'entraînement agissant sur les axes (9) de bras de manivelle.
